# DEMANDE DE BREVET EUROPEEN

(11) **EP 4 693 782 A2**
(43) Date de publication de la demande: **11.02.2026**
(21) Numéro de dépôt: 25194654.7
(22) Date de dépôt: 07.08.2025
(51) Int. Cl.: H02G 15/34, F16L 59/065, F16L 59/14, H01B 12/06, H01R 4/68, H01B 12/16

(54) **CONDUITE ET LIGNE DE CONDUITE POUR UNE LIAISON ELECTRIQUE SUPRACONDUCTRICE**

(30) Priorité: 08.08.2024 FR 2408775
(71) Demandeur: Nexans, 92400 Courbevoie (FR); ITP SA, 78430 Louveciennes (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: LALLOUET, Nicolas, 92400 Courbevoie (FR); ALLAIS, Arnaud, 92400 Courbevoie (FR); GERVAISE, Laurent, 92400 Courbevoie (FR); GEERTSEN, Christian, 78430 Louveciennes (FR); DAMOUR, Aurélien, 78430 Louveciennes (FR); BARJHOUX, Pierre, 38360 Sassenage (FR); CRESPI, Pierre, 38360 Sassenage (FR)
(74) Mandataire: Cabinet Boettcher

(57) **Abrégé**

L'invention concerne une conduite (100) pour une liaison électrique supraconductrice, formant une unité destinée à être connectée à ses extrémités pour une formation de la liaison électrique supraconductrice, comprenant : un cryostat (110) formant une conduite à double enveloppe (ou PiP pour « pipe-in-pipe » en anglais) comprenant un tube intérieur (111) et un tube extérieur (112) coaxiaux et un isolant thermique (113) occupant la zone annulaire entre le tube extérieur (112) et le tube intérieur (111) ; et un cœur de câble supraconducteur (105) logé à l'intérieur du tube intérieur (111), le cœur de câble supraconducteur (105) présentant à température ambiante une surlongueur par rapport à la longueur du cryostat (110) de sorte que dans son état supraconducteur la longueur du cœur de câble (105) est supérieure ou égale à la longueur du cryostat (110).

## Description

### DOMAINE TECHNIQUE ET ARRIERE-PLAN TECHNOLOGIQUE

La présente invention concerne une conduite pour une liaison électrique supraconductrice, notamment une conduite cryogénique, une ligne de conduite la comprenant, ainsi qu'un procédé d'installation de la ligne de conduite, et une liaison électrique supraconductrice comprenant la ligne de conduite.

Les sources d'énergie renouvelables suscitent l'intérêt en vue d'une transition dans la production d'énergie. En particulier, la génération d'énergie électrique par des fermes éoliennes en mer (« offshore » en anglais) parvient à une parité de coût avec d'autres techniques classiques de production d'énergie. Cependant, les solutions de transport de l'énergie électrique depuis son lieu de production en mer vers les côtes restent chères. Notamment, pour un transport de l'énergie électrique par un câble électrique résistif conventionnel, il est nécessaire de transformer l'énergie électrique vers la haute tension au niveau de l'éolienne en mer, pour la rendre moins sensible aux pertes par effet joule durant le transport. Le transport d'énergie électrique sur des grandes distances engendre toutefois des chutes de tension liées à la résistance du câble, ce qui limite la distance pouvant être parcourue, particulièrement en régime de courant alternatif.

Les câbles supraconducteurs apportent plusieurs avantages à de telles liaisons. Tout d'abord, à dimensions et niveaux de tension sensiblement équivalents par rapport à un câble conventionnel composé de conducteurs électriques résistifs, les câbles supraconducteurs peuvent transporter un courant électrique beaucoup plus important grâce à une très grande densité de courant admissible dans leurs parties supraconductrices. Par exemple, un ruban supraconducteur dit « HTS » (pour « High Temperature Superconductors » en anglais) a typiquement une dimension de 3mm x 0.4mm et peut, dans son état supraconducteur, transporter des courants supérieurs à 250 A. Un tel ruban supraconducteur HTS a une densité de courant supérieure à 200 A/mm² qui est très supérieure à la densité usuelle dans les conducteurs résistifs des câbles conventionnels, qui reste limitée à quelques ampères par millimètres carré. Cette caractéristique des câbles supraconducteurs permet donc, à des tensions et dimensions équivalentes, de transporter des puissances électriques beaucoup plus importantes que dans un câble haute tension conventionnel. Typiquement, un câble supraconducteur comprend un cryostat entourant un cœur de câble qui comprend la partie supraconductrice et permettant une circulation contrôlée d'un fluide cryogénique.

Une autre utilisation intéressante des câbles supraconducteurs pour des liaisons en mer consiste à utiliser leur capacité de transport de forts courants pour réduire la tension et augmenter la compacité du câble par rapport à un câble conventionnel résistif, tout en conservant une puissance de transport équivalente.

Dans ces applications, les câbles supraconducteurs ont une plus grande efficacité de transport d'énergie que les câbles conventionnels car les pertes électriques le long du câble sont sensiblement limitées grâce à la suppression des pertes par effet Joule, puisque ce phénomène est inexistant dans l'état supraconducteur. Le caractère supraconducteur d'une liaison électrique permet de réduire très sensiblement la chute de tension sur de grandes distances, et donc de concevoir des liaisons qui restent efficaces sur des longueurs bien plus grandes qu'un câble résistif conventionnel.

Du fait de ces avantages, et de manière plus praticable, l'utilisation de câbles supraconducteurs pour le transport d'énergie depuis les fermes éoliennes en mer permettrait donc de fortement diminuer, voire de supprimer, les besoins de transformation de l'énergie électrique vers de plus hautes tensions ou une conversion en courant continu au niveau du poste électrique en mer. Cependant, les câbles supraconducteurs conventionnels ne sont pas adaptés à une utilisation sous-marine sur de grandes longueurs car leurs enveloppes cryogéniques sont souples et ne peuvent supporter ni les contraintes liées à un dépôt en pleine mer, ni les fortes pressions existant dans les fonds marins et s'exerçant sur l'enveloppe externe, ni les fortes pressions requises pour la circulation d'un fluide cryogène dans l'enveloppe interne.

On connait la publication de demande de brevet EP 2 615 614 A1 qui décrit une liaison électrique supraconductrice comprenant une conduite formée d'un tube intérieur et d'un tube extérieur qui sont concentriques. La zone centrale du tube intérieur reçoit le câble supraconducteur. Les tubes extérieur et intérieur comprennent des soufflets pour gérer la contraction thermique lors d'une baisse de la température pour atteindre l'état supraconducteur du câble supraconducteur. En outre, une caméra visualise une cible à une extrémité du câble ; et un dispositif d'actionnement déplace les extrémités des tubes intérieur et extérieur grâce aux soufflets en correspondance avec le déplacement de la cible détectée par la caméra. La gestion de la contraction thermique du câble supraconducteur et des tubes intérieur et extérieur de son cryostat est donc complexe et fait appel à des dispositifs actifs sophistiqués. En outre, les soufflets introduisent des points de faiblesse mécanique non compatibles avec les contraintes liées à un dépôt en pleine mer, et peu adaptés aux contraintes de pression interne dans le tube intérieur liée à la circulation d'un fluide cryogène. Ces soufflets introduisent en outre une résistance à l'écoulement du fluide cryogénique qui est élevée. Ces inconvénients des soufflets ne favorisent pas la réalisation de liaisons supraconductrices sur de grandes longueurs, car, pour des raisons économiques, celles-ci nécessitent des séparations importantes entre les stations de refroidissement et de pompage.

D'autre part, le système décrit ne fonctionne que dans des liaisons électriques suffisamment courtes pour que l'effort de contraction thermique puisse se transmettre sur la longueur du câble vers les zones mobiles. Au-delà d'une certaine longueur, le poids propre du câble va empêcher sa contraction, ce qui introduit un niveau de contraintes dommageable à son fonctionnement.

Il existe donc un besoin pour une conduite de liaison électrique supraconductrice, notamment pour une installation sous-marine, dans laquelle la gestion de la contraction thermique du câble supraconducteur est simplifiée tout en maintenant une robustesse et une fiabilité élevée face aux contraintes d'installation, de circulation du fluide cryogénique, d'exploitation, et environnementales.

### RÉSUMÉ DE L'INVENTION

Pour cela, l'invention propose une conduite (ou « pipe » en anglais) pour une liaison électrique supraconductrice, formant une unité destinée à être connectée à ses extrémités pour une formation de la liaison électrique supraconductrice, comprenant :
- un cryostat formant une conduite à double enveloppe (ou PiP pour « pipe-in-pipe » en anglais) comprenant un tube intérieur et un tube extérieur coaxiaux et un isolant thermique occupant la zone annulaire entre le tube extérieur et le tube intérieur ;
- un cœur de câble supraconducteur logé à l'intérieur du tube intérieur, le cœur de câble supraconducteur présentant à température ambiante une surlongueur par rapport à la longueur du cryostat de sorte que dans son état supraconducteur la longueur du cœur de câble supraconducteur est supérieure ou égale à la longueur du cryostat.

Grâce à sa surlongueur à température ambiante, lorsque le cœur de câble supraconducteur se rétracte sous l'effet du passage à la température critique en deçà de laquelle apparait l'état supraconducteur, il exerce très peu de contraintes mécaniques sur ses jonctions avec d'autres cœurs de câble ou une terminaison de la liaison électrique supraconductrice. La gestion de la contraction thermique est donc obtenue par l'agencement du cœur de câble au sein du cryostat lors de l'assemblage de la conduite, et non pas à l'aide de dispositifs actifs sophistiqués. La gestion de la contraction thermique est donc simplifiée par rapport à l'art antérieur.

Selon un mode de réalisation, la surlongueur du cœur de câble est supérieure ou égale à 0,3 % par rapport à la longueur du cryostat à température ambiante.

Selon un mode de réalisation, le tube intérieur présente un coefficient de dilatation thermique inférieur ou égal à 2.10⁻⁶ m/ (m.K) .

Selon une variante, le tube intérieur est en un alliage FeNi entre 34 et 38% de Nickel.

Selon un mode de réalisation, l'isolant thermique a un module de Young en compression, supérieur à 0,1 MPa, voire 0,5 MPa.

Selon un mode de réalisation, l'isolant thermique est configuré pour opérer à une pression comprise entre 0,01 mbar et 10 mbar.

Selon un mode de réalisation, la conduite pour une liaison électrique supraconductrice comprend une pluralité dudit cœur de câble supraconducteur logés à l'intérieur du tube intérieur.

Selon un mode de réalisation, la conduite pour une liaison électrique supraconductrice comprend au moins un dispositif de blocage fixant un point du cœur de câble supraconducteur au tube intérieur.

Selon une variante, le dispositif de blocage forme en outre un écarteur maintenant le point du cœur de câble supraconducteur à distance du tube intérieur.

Selon une variante, le dispositif de blocage du cœur de câble est situé à proximité, au niveau, d'une des extrémités de la conduite.

Selon une variante, un dispositif de blocage respectif est situé à proximité, ou au niveau, de chaque extrémité de la conduite.

L'invention concerne en outre une ligne de conduite pour une liaison électrique supraconductrice, comprenant une pluralité de conduites selon l'invention, les conduites étant jointes successivement à leurs extrémités par une jonction de conduite respective,
ladite jonction de conduite comprenant :
- une jonction électrique réalisant une connexion électrique des cœurs de câble supraconducteur,
- une jonction de cryostat réalisant une jonction des tubes intérieurs, une jonction des tubes extérieurs, et une continuité des isolants thermiques.

Selon un mode de réalisation, la ligne de conduite comprend une pluralité de conduites selon un mode de réalisation, ladite ligne de conduite étant configurée de sorte qu'une longueur de cœur de câble entre deux dispositifs de blocage est supérieure à la distance entre les deux dispositifs de blocage.

L'invention concerne également un procédé d'installation d'une ligne de conduite pour une liaison électrique supraconductrice, comprenant :
- la réalisation de plusieurs conduites pour liaison électrique supraconductrice selon l'invention ;
- la solidarisation desdites conduites les unes après les autres par des jonctions de conduite à leurs extrémités.

Selon un mode de réalisation, le procédé comprend la réalisation d'au moins une conduite selon l'invention, l"étape de solidarisation comprenant la destruction d'un de ses dispositifs de blocage de sorte que la ligne de conduite comprenne un seul dispositif de blocage au niveau de chaque jonction de conduite.

Selon un mode de réalisation, le procédé comprend la réalisation d'au moins une conduite selon l'invention, l'étape de solidarisation étant configurée de sorte qu'une portion de cœur de câble supraconducteur comprise entre deux dispositifs de blocage en vis-à-vis de part et d'autre d'une jonction sont configurés pour absorber une contraction thermique.

L'invention concerne encore un procédé d'installation d'une ligne de conduite selon l'invention comprenant :
- l'enroulement de ladite ligne de conduite sur un tambour ;
   puis,
- le déroulement de ladite ligne de conduite à partir du tambour, notamment depuis un bateau pour un dépôt sur un fond marin.

L'invention concerne aussi un procédé d'installation d'une liaison électrique supraconductrice, comprenant :
- l'installation, notamment sur un fond marin, d'une première ligne de conduite selon l'invention,
- la jonction en mer, notamment sur un bateau, de la première ligne de conduite avec une deuxième ligne de conduite selon l'invention.

Selon un mode de réalisation, le procédé comprend la connexion des lignes de conduite avec une ou plusieurs unités de refroidissement et/ou de pompage pour une circulation d'un fluide cryogénique.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig. 1] représente un premier exemple de conduite pour une liaison électrique supraconductrice ;
[Fig. 2] représente un deuxième exemple de conduite pour une liaison électrique supraconductrice ;
[Fig. 3] représente un exemple de ligne de conduite pour une liaison électrique supraconductrice ;
[Fig. 4] représente un premier exemple de liaison électrique supraconductrice ;
[Fig. 5] représente un deuxième exemple de liaison électrique supraconductrice ;
[Fig. 6] représente un troisième exemple de liaison électrique supraconductrice ;
[Fig. 7] représente un quatrième exemple de liaison électrique supraconductrice ;
[Fig. 8] représente un exemple d'assemblage d'une ligne de conduite pour une liaison électrique supraconductrice ;
[Fig. 9] représente une étape d'un exemple d'installation d'une liaison électrique supraconductrice ;
[Fig. 10] représente une étape de l'exemple d'installation d'une liaison électrique supraconductrice ;
[Fig. 11] représente une étape de l'exemple d'installation d'une liaison électrique supraconductrice ;
[Fig. 12] représente une étape de l'exemple d'installation d'une liaison électrique supraconductrice ;
[Fig. 13] représente une étape de l'exemple d'installation d'une liaison électrique supraconductrice.

### Description détaillée

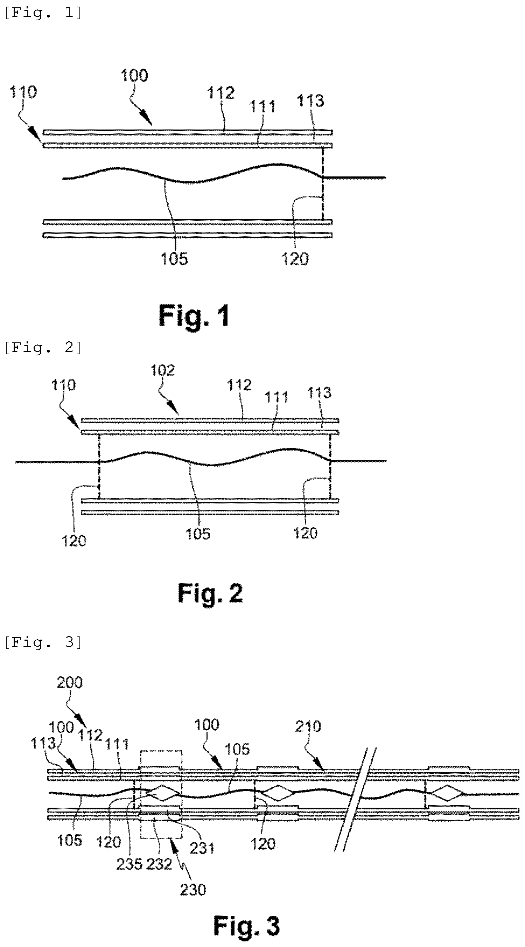

Un premier exemple 100 de conduite (ou « pipe » en anglais) pour une liaison électrique supraconductrice va être décrit en relation avec la Figure 1.

La conduite 100 comprend un cœur de câble supraconducteur 105 s'étendant dans un cryostat 110. Le cryostat 110 forme une conduite à double enveloppe, encore désignée « conduite PiP » (pour « Pipe-in-Pipe » en anglais). Le cryostat 110 comprend un tube intérieur 111 et un tube extérieur 112 qui sont coaxiaux. Un isolant thermique 113 occupe la zone annulaire entre le tube intérieur 111 et le tube extérieur 112, notamment à un jeu d'insertion près. Le cœur de câble supraconducteur 105 est logé à l'intérieur du tube intérieur 111.

Notamment, le tube intérieur 111 est à la température cryogénique quand la conduite est en fonction. Le tube intérieur 111 permet donc de maintenir la température cryogénique pour le cœur de câble supraconducteur 105. En particulier, l'isolant thermique 113 assure une isolation thermique entre le tube intérieur 111 et le tube extérieur 112, dont la surface externe est notamment à température ambiante.

La conduite 100 forme une unité dont les extrémités vont être connectées pour former une liaison électrique supraconductrice. Notamment, les extrémités de la conduite 100 sont configurées pour être connectées à une autre conduite, de préférence identique, ou à une terminaison de la liaison électrique supraconductrice. En particulier, les extrémités du cœur de câble supraconducteur 105, du tube intérieur 111, et du tube extérieur 112 vont être connectées à des parties correspondantes d'une autre conduite, de préférence identique, ou d'une terminaison de la liaison électrique supraconductrice.

La conduite 100 est particulière en ce que, à température ambiante, le cœur de câble supraconducteur 105 présente une surlongueur par rapport à la longueur du cryostat 110, notamment par rapport aux longueurs du tube intérieur 111 et du tube extérieur 112. La surlongueur est configurée de sorte que, dans son état supraconducteur, le cœur de câble supraconducteur 105 présente une longueur qui est supérieure ou égale à celle du cryostat 110, notamment aux longueurs du tube intérieur 111 et du tube extérieur 112. En particulier, l'état supraconducteur considéré est celui obtenu lorsque le tube 111 a atteint une température stabilisée sous l'effet d'une circulation du fluide cryogénique. Notamment, selon la direction longitudinale, le cœur de câble 105 a une longueur développée qui est supérieure à la distance entre les deux extrémités longitudinales du tube intérieur 111 et du tube extérieur 112.

Lors de son refroidissement pour atteindre son état supraconducteur, le cœur de câble 105 subit une contraction. En l'absence de moyens pour gérer cette contraction, celle-ci est susceptible de créer des contraintes mécaniques importantes le long du cœur de câble supraconducteur 105 ou au niveau de ses extrémités. Grâce à la surlongueur, le cœur de câble 105 peut se contracter en engendrant des contraintes mécaniques très limitées. Par exemple, la surlongueur du cœur de câble 105 est supérieure ou égale à 0,3 % par rapport à la longueur du cryostat à température ambiante, ce qui correspond à une contraction typique d'un cœur de câble supraconducteur lors d'un passage de la température ambiante à la température critique en dessous de laquelle l'état supraconducteur est obtenu.

Notamment, le cœur de câble supraconducteur 105 correspond à la partie centrale d'un câble supraconducteur classique située à l'intérieur de l'enceinte cryogénique. En particulier, le cœur de câble supraconducteur 105 comprend, ou consiste en, une partie supraconductrice centrale, une couche diélectrique entourant la partie supraconductrice, et un écran entourant la couche diélectrique. L'écran peut être constitué lui-même pour tout ou partie de supraconducteurs.

Notamment, le cryostat 110 réalise une enceinte cryogénique autour du cœur de câble supraconducteur 105, le tube intérieur 111 étant à la température cryogénique quand la conduite est en fonction, c'est-à-dire lorsqu'un fluide cryogénique circule dans la conduite. En particulier, le cryostat 110 a une conductivité thermique suivant une direction radiale qui est inférieure à 5 mW/(m.K), voire inférieure à 2,5 mW/(m.K), ce qui permet une bonne isolation thermique de la conduite 100. Par exemple, le tube intérieur 111 est configuré pour recevoir un fluide cryogénique qui circule autour du cœur de câble supraconducteur 105 pour le refroidir, notamment à travers la couche diélectrique du cœur de câble 105. Le fluide cryogénique peut être à une température inférieure à 100 K, de préférence inférieure à 80 K. En outre, ou alternativement, la partie supraconductrice du cœur de câble 105 peut former un tube creux dans lequel circule le fluide cryogénique.

Le cryostat 110 forme une conduite à double enveloppe, c'est-à dire une conduite dans laquelle le tube intérieur 111 et le tube extérieur 112 sont coaxiaux. Notamment, les tubes intérieur 111 et extérieur 112 sont rigides sur toute leur longueur. En particulier, les tubes intérieur 111 et extérieur 112 sont dépourvus de corrugations et de soufflets. De préférence, le tube extérieur 112, respectivement le tube intérieur 111, a un diamètre et une épaisseur uniforme sur toute sa longueur, ce qui lui permet de mieux supporter des pressions extérieures et intérieures et de présenter des pertes de charge réduites, notamment par rapport à des tubes corrugués ou incluant des soufflets.

En particulier, le tube extérieur 112 forme une enveloppe qui protège mécaniquement son contenu par rapport à l'environnement extérieur, notamment contre l'humidité ou des pressions ambiantes importantes ou des agressions mécaniques. Par exemple, le tube extérieur 112 est en un alliage métallique, tel qu'un acier carbone. Le tube extérieur 112 est notamment revêtu d'une couche anticorrosion. Par exemple, le tube extérieur 112 a une épaisseur comprise entre 10 mm et 35 mm ; et un diamètre externe compris entre 250 mm et 610 mm.

De préférence, la longueur du tube intérieur 111 reste relativement constante lors de son refroidissement à une température cryogénique inférieure à la température critique du cœur de câble supraconducteur. En particulier, la gestion de la contraction thermique au niveau du tube intérieur 111 est obtenue en choisissant, pour le tube intérieur 111, un matériau présentant un faible coefficient de dilatation thermique parmi ceux adaptés aux températures cryogéniques. Par exemple, le tube intérieur 111 présente un coefficient de dilatation thermique inférieur ou égal à 2.10⁻⁶ m/(m.K), notamment suivant une direction longitudinale du tube intérieur 111. Par exemple, le tube intérieur 111 est en un alliage métallique, tel qu'un alliage FeNi entre 34 et 38% de Nickel. En particulier, le tube intérieur 111 est en Invar^{®}, qui est un alliage FeNi à 36% de Nickel. Notamment, le tube intérieur 111 a une pression d'éclatement très largement supérieure à celle d'une enceinte intérieure de cryostat d'un câble supraconducteur habituel. Notamment, le tube intérieur 111 supporte une pression du fluide cryogénique supérieure à 50 bar.

Par exemple, pour un diamètre interne de 200 mm et une épaisseur de 10 mm, le tube intérieur 111 peut supporter une pression du fluide cryogénique de l'ordre de 200 bar. Par exemple, le tube intérieur 111 a une épaisseur comprise entre 5 mm et 18 mm ; et un diamètre externe compris entre 100 mm et 360 mm.

En particulier, du fait de leur rigidité et de leur très grande résistance mécanique, les tubes interne 111 et externe 112 permettent d'installer la conduite sur des fonds océaniques profonds, en utilisant des méthodes de dépôt de conduite en mer standard, par exemple jusqu'à 2000 m. Notamment, les tubes intérieur 111 et extérieur 112 ont des surfaces lisses, et en particulier des épaisseurs importantes, contrairement aux enceintes cryogéniques corruguées des câbles supraconducteurs classiques. Cela permet de réduire les coefficients de friction hydraulique dans le tube intérieur 111 et d'accepter une pression du fluide cryogénique plus élevée dans le tube intérieur 111. Notamment, la surface interne du tube intérieur 111 a une rugosité inférieure à 30 µm, voire 10 µm, de manière à réduire la perte de charge d'un fluide cryogénique circulant dans le tube intérieur 111. Grâce à la résistance à des pressions plus élevées du tube intérieur 111 et aux pertes de charges réduites dans celui-ci, la conduite 100 permet d'obtenir des lignes de conduite de plus grande longueur (par exemple supérieure à 50 km) entre deux stations de pompage et/ou de refroidissement du fluide cryogénique. Dans certaines applications, on évite ainsi l'installation de couteuses stations intermédiaires de pompage et/ou de refroidissement en mer.

Ainsi, notamment, le cryostat 110 accepte des pressions de pompage élevées et présente une résistance à l'écoulement faible.

De préférence, l'isolant thermique 113 est lui-même résistant à la compression, ou durcit sous contraintes, de manière à résister à des efforts de compression entre le tube intérieur 111 et le tube extérieur 112, notamment lors d'une phase d'installation par enroulage/déroulage décrite plus loin. A cet effet, l'isolant thermique 113 a par exemple un module de Young, mesuré en compression, supérieur à 0,1 MPa, voire 0,5 MPa. Par exemple, l'isolant thermique 113 est en un matériau microporeux à base de silice. Notamment, l'isolant thermique 113 est configuré pour permettre un centrage, en particulier à un jeu d'insertion près, du tube intérieur 111 dans le tube extérieur 112 par lui-même, c'est-à-dire sans l'aide d'espaceurs entre le tube extérieur 112 et le tube intérieur 111. Le diamètre externe de l'isolant thermique 113 peut présenter un jeu par rapport au diamètre interne du tube extérieur 112 pour permettre son insertion à l'intérieur du tube extérieur 112.

Notamment, l'isolant thermique 113 est mis sous vide lors du fonctionnement de la conduite 100 dans une liaison électrique supraconductrice. De préférence, l'isolant thermique 113 est configuré pour opérer à une pression résiduelle comprise entre 0,01 mbar et 10 mbar. En particulier, à cet effet, le matériau microporeux a des pores de taille comprise entre 10 et 100 nm.

En particulier, le diamètre interne du cryostat 110, notamment du tube intérieur 111, permet de recevoir la surlongueur du cœur de câble 105. Notamment, la surlongueur prend la forme d'ondulations, de spirales ou de pliures à l'intérieure du tube interne 111. Ainsi, la surlongueur peut être logée dans le cryostat 100 de manière simple.

Notamment, un dispositif de blocage 120 fixe un point du cœur de câble 105 au tube intérieur 111. Notamment, le point de fixation du cœur de câble 105 est immobile par rapport au tube intérieur 111. Le dispositif de blocage 120 permet de maintenir le cœur de câble 105 dans la conduite 100 pour éviter qu'il ne se désengage de la conduite 100 lors d'une manipulation de celle-ci. En outre, le dispositif de blocage 120 permet une reprise des contraintes mécaniques lors de la contraction thermique du cœur de câble 105. Ainsi, lorsque la conduite 100 est connectée avec d'autres conduites 100 identiques dans une ligne de conduite, les contraintes mécaniques sont réparties le long de la ligne de conduite lors du refroidissement, ce qui facilite la gestion de la contraction.

En particulier, le dispositif de blocage 120 forme en outre un écarteur qui maintient le point de fixation du cœur de câble 105 à distance du tube intérieure 111, notamment à une position centrale se trouvant sur l'axe du tube intérieur 111. Cela permet d'éloigner localement le cœur de câble 105 de la paroi interne du tube intérieur 111. En outre, on évite un contact du cœur de câble supraconducteur 105 avec le tube intérieur 111 lors des étapes d'assemblage entre plusieurs conduites 100, 102, décrites ultérieurement. En effet, ces étapes d'assemblage peuvent comprendre des soudages qui pourraient endommager le cœur de câble 105.

Notamment, le dispositif de blocage 120 est situé à proximité d'une extrémité de la conduite 100. Il est alors facile à positionner après l'introduction du cœur de câble 105 dans le tube intérieur 111. La conduite 100 peut comprendre un seul dispositif de blocage 120 à proximité de l'une de ses extrémités, comme par exemple illustré en Figure 1. Cependant, la conduite 100 peut comprendre un dispositif de blocage à proximité de chaque extrémité. Le ou les dispositifs de blocage 120 sont à proximité de l'extrémité respective de la conduite 100, voire au niveau de l'extrémité respective de la conduite 100.

La Figure 2 représente un deuxième exemple de conduite 102 identique au premier exemple de conduite 100, si ce n'est qu'il comprend un dispositif de blocage 120 à chaque extrémité. En ayant un dispositif de blocage 120 à chaque extrémité, la conduite 102 permet un meilleur maintien du cœur de câble 105, notamment lors de la manutention de la conduite 102.

Notamment, la conduite 100, 102 a une longueur comprise entre 500 m et 2 km, de préférence entre 1 et 1,5 km.

Un exemple de ligne de conduite 200 (« pipeline » en anglais) intégrant une pluralité de conduites 100 est illustré en Figure 3. Les conduites 100 sont jointes successivement à leurs extrémités, notamment jusqu'à atteindre une longueur d'environ 15 km. Notamment, la ligne de conduite 200 est alors enroulée sur un tambour pour être ultérieurement installée sur un site d'opération, et en particulier être jointe à une ou plusieurs autres lignes de conduite 200.

Une conduite 100 est jointe à la conduite adjacente par une jonction de conduite 230. La jonction 230 comprend une jonction électrique 235 qui réalise une connexion électrique entre les cœurs de câble 105 des deux conduites 100 adjacentes. Notamment, la jonction électrique 235 comprend une jonction électrique de câble supraconducteur connue en soi. Une jonction de cryostat comporte une jonction 231 des tubes intérieurs 111, une jonction 232 des tubes extérieurs 112, et une continuité des isolants thermiques 113. Notamment, les jonctions 231, 232 des tubes intérieurs 111 et extérieurs 112 sont réalisées par des soudures. En particulier, les jonctions 231, 232 sont dépourvues de corrugations et de soufflets. De préférence, les jonctions 231, 232 sont configurées pour une transition continue entre les diamètre et épaisseur des tubes intérieurs 111 d'une part, et des tubes extérieurs 112 d'autre part. En particulier, les jonctions 231, 232 sont configurées pour que les diamètres et les épaisseurs des tubes 111, 112 restent uniformes entre deux conduite 100 identiques.

Grâce aux conduites 100, le long de la ligne de conduite 200, une longueur de cœur de câble 105 entre deux dispositifs de blocage 120 est supérieure à la distance entre les deux dispositifs de blocage 120. Ainsi, les contraintes mécaniques dues à la contraction thermique du cœur de câble 105 sont réparties le long de la ligne de conduite 200. En particulier, les dispositifs de blocage 120 sont placés à intervalle régulier le long de la ligne de conduite 200.

Les dispositifs de blocage 120 permettent notamment de bloquer la position de la succession de cœur de câble 105 lors de phases de construction, d'installation, d'opération et de maintenance de la ligne de conduite 200. Par exemple, les dispositifs de blocage sont installés le long la ligne de conduite 200 lors de l'assemblage de celles-ci, comme cela sera expliqué plus loin.

Notamment, le cryostat 210 de la ligne de conduite 200 comprend la succession des cryostats 110 des conduites 100 connectées par les jonctions de cryostat 231, 232. En particulier, un fluide cryogénique circule à l'intérieur du cryostat 210 de la ligne de conduite 200 pour refroidir le cœur de câble 105. Le fluide cryogénique peut être refroidi, en particulier à une température inférieure à 100 K, de préférence inférieure à 80 K, pressurisé et mis en circulation en boucle fermée à l'aide d'une ou plusieurs unités de refroidissement et/ou de pompage dédiées. La boucle est de préférence hermétique.

La ligne de conduite 200 peut être aboutée avec d'autres lignes de conduites pour former une ligne de conduite plus longue atteignant notamment plusieurs dizaines de kilomètres, par exemple 60 **km.**

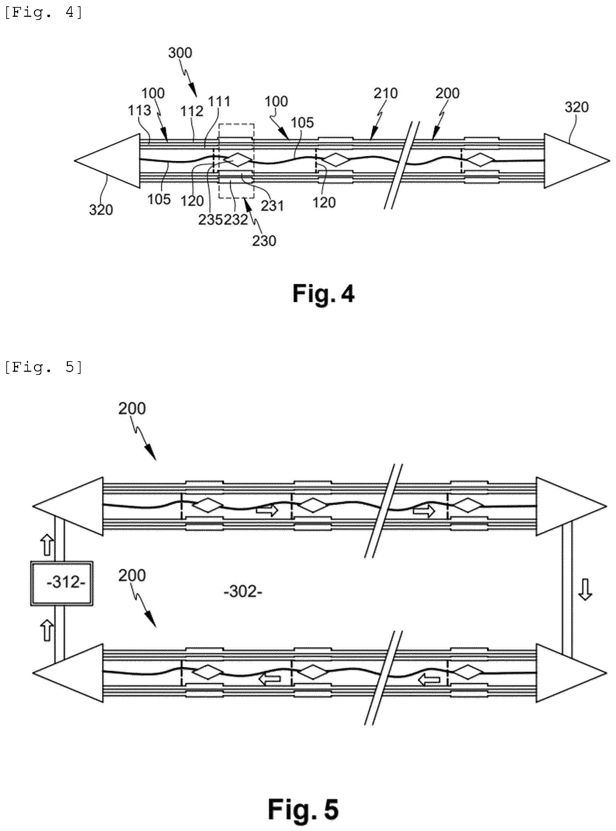

La Figure 4 illustre un premier exemple de liaison électrique supraconductrice 300. La liaison électrique supraconductrice 300 est notamment obtenue en connectant en série plusieurs lignes de conduites 200.

En particulier, une terminaison 320 est connectée à chaque extrémité de la liaison électrique 300. La terminaison 320 a notamment une fonctionnalité mécanique consistant à relier mécaniquement le tube intérieur 111 et le tube extérieur 112 du cryostat pour sceller la zone annulaire comprenant l'isolant thermique 113. La liaison mécanique entre le tube intérieur 111 et le tube extérieur 112 peut être en Invar ^{®}, ou en un autre alliage tel qu'en acier inoxydable, ou en tout autre matériau composite résistant aux températures cryogéniques, notamment inférieures à 100 K, de préférence inférieures à 80 K. La terminaison 320 a aussi un rôle hydraulique en permettant l'entrée et la sortie du fluide cryogénique dans le cryostat 210 formé de la succession des cryostats 110 des conduites 100. La terminaison 320 permet aussi une gestion thermique à l'extrémité de la liaison électrique supraconductrice 300 en gérant de manière optimisée les flux de chaleur entre le milieu intérieur cryogénique et l'extérieur à température ambiante. La terminaison 320 assure également une liaison électrique entre le cœur de câble supraconducteur 105 à température cryogénique et le réseau électrique classique opérant à température ambiante.

Les Figures 5 à 7 illustrent d'autres exemples de liaison électrique supraconductrice 302, 303, 304 comprenant une ou plusieurs lignes de conduite 200. Sur les figures, des flèches indiquent des sens de circulation du fluide cryogénique. Pour compenser une augmentation de la température du fluide cryogénique ou une chute de sa pression de circulation, une ou plusieurs unités de refroidissement et/ou de pompage 312, 314 peuvent être installées aux extrémités ou le long de la liaison électrique supraconductrice, 302, 303, 304.

Le deuxième exemple 302 de liaison électrique supraconductrice illustré en figure 5 est une liaison en courant continu comprenant deux lignes de conduite 200, l'une incluant la partie d'un cœur de câble supraconducteur constituant le pôle positif, l'autre incluant la partie d'un cœur de câble supraconducteur constituant le pôle négatif. La liaison électrique supraconductrice 302 comprend notamment une unité de refroidissement et/ou de pompage 312 à l'une de ses extrémités. La liaison électrique supraconductrice 302 en courant continu pourrait être réalisée différemment.

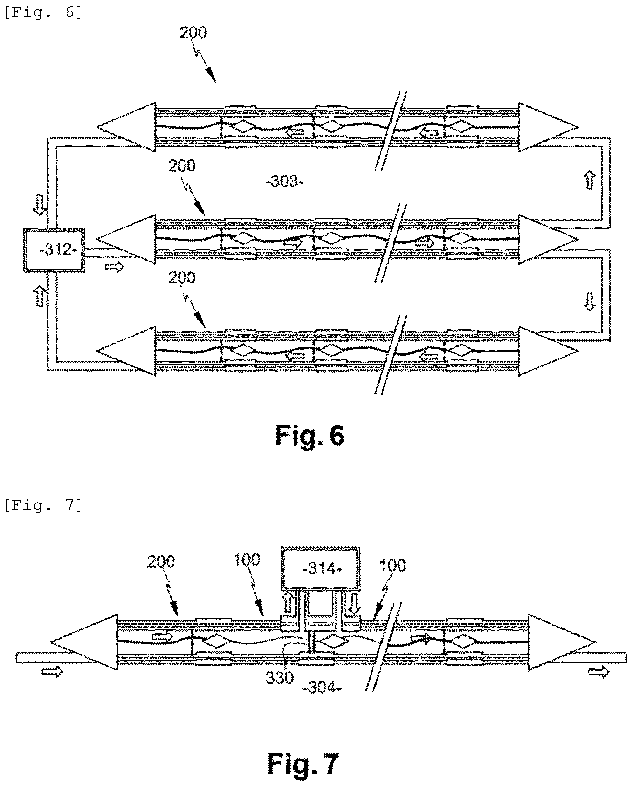

Le troisième exemple 303 de liaison électrique supraconductrice illustré en Figure 6 est une liaison triphasée en courant alternatif, comprenant trois lignes de conduite 200, chacune formant une phase électrique. La liaison électrique supraconductrice 303 comprend notamment une unité de refroidissement et/ou de pompage 312 à l'une de ses extrémités. La liaison électrique supraconductrice 303 triphasée en courant alternatif pourrait être réalisée différemment.

Le premier exemple 300, le deuxième exemple 302 et le troisième exemple 303 de liaison électrique supraconductrice peuvent comprendre une unité de refroidissement et/ou de pompage intermédiaire 314, comme notamment illustré en Figure 7. Le quatrième exemple 304 de liaison électrique supraconductrice illustré en Figure 7 comprend une station de refroidissement et/ou de pompage intermédiaire 314, mais elle pourrait en comprendre plusieurs le long de la liaison 304, par exemple régulièrement réparties pour un refroidissement et/ou un pompage uniforme du fluide cryogénique. Notamment, l'unité de refroidissement et/ou de pompage intermédiaire 314 se trouve au niveau d'une jonction de cryostat entre deux conduites 100. La liaison électrique supraconductrice 304 peut alors comprendre une paroi 330 déviant le fluide cryogénique, ou la majeure partie de celui-ci, vers l'unité de refroidissement et/ou de pompage intermédiaire 314, où il sera refroidi et/ou pressurisé à nouveau pour être réinjecté dans la liaison électrique supraconductrice 304 après la paroi 330.

Les unités de refroidissement et/ou de pompage 312, 314 peuvent chacune comprendre un groupe de pompage. Celui-ci permet de délivrer le fluide cryogénique avec une haute pression pour faciliter sa bonne circulation dans la liaison électrique supraconductrice 300, 302, 303, 304 ou de compenser la perte de charge du fluide après sa circulation sur des distances kilométriques. Le fluide cryogénique est par exemple de l'azote liquide, notamment à une température de l'ordre de - 200°C, ou de l'hydrogène liquide, ou tout autre fluide cryogénique ou mélange de fluide cryogénique adapté pour un refroidissement du cœur de câble 105 en dessous de sa température critique de fonctionnement.

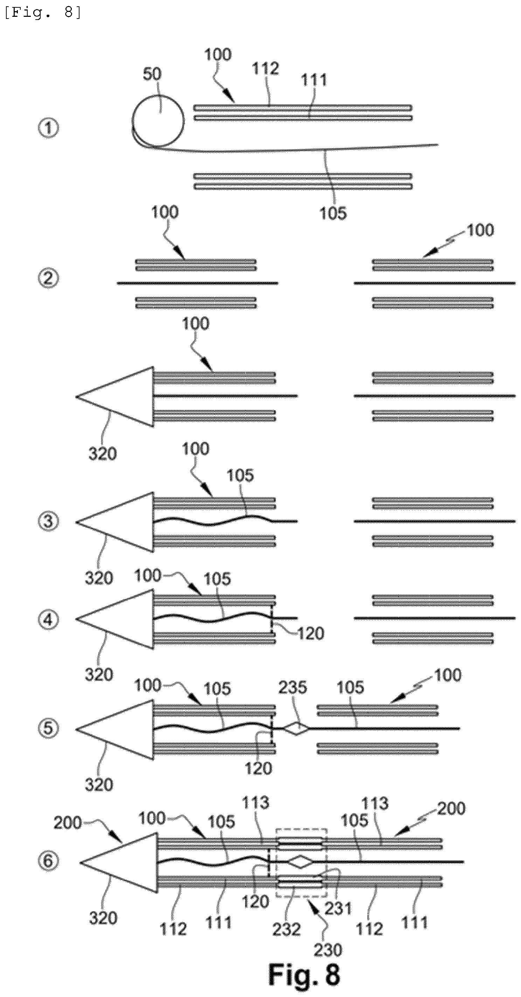

La Figure 8 représente un exemple de procédé de fabrication d'un exemple de ligne de conduite 200. Le procédé comprend la réalisation de plusieurs conduites 100 et la solidarisation des conduites 100 les unes après les autres à leurs extrémités.

Dans une première étape, une conduite 100 est préparée en tirant un cœur de câble 105 dans le tube intérieur 111 de la conduite 100. Notamment, le cœur de câble supraconducteur 105 est déroulé depuis un touret 50 pour atteindre une longueur comprenant la surlongueur. Cette étape est réalisée à température ambiante.

A l'étape 2, au moins deux conduites 100 ainsi formées sont prêtes à être connectées ensemble pour former la ligne de conduite. D'autres conduites nécessaires à la formation de la ligne de conduite peuvent être réalisées en même temps, ou pourront être progressivement réalisées en parallèle des étapes décrites ci-après.

A l'étape 3, une terminaison 320 ou l'extrémité d'une autre conduite 100 est connectée à une extrémité d'une première conduite 100.

A l'étape 4, le cœur de câble 105 est manipulé à l'intérieur de la première conduite 100 pour y loger la surlongueur. Par exemple, le cœur de câble 105 est repoussé à l'intérieur de la première conduite 100 pour y loger la surlongueur.

A l'étape 5, le dispositif de blocage 120 est positionné dans le tube intérieur 111.

A l'étape 6, une jonction électrique 235 est réalisée entre les cœurs de câble 105 de la première conduite 100 et de la conduite 100 adjacente.

A l'étape 7, la jonction de cryostat 230 est réalisée, en connectant les extrémités des tubes intérieurs 111 par une jonction 231 ; en connectant les extrémités des tubes extérieurs 112 par une jonction 232 ; et en raccordant les isolants thermiques 113 pour assurer une continuité de l'isolation thermique. Les connexions entre les tubes 111, 112 sont par exemple réalisées par soudure.

Le procédé de fabrication de la ligne de conduite 200 illustré en Figure 8 pourrait être différent. Par exemple, la ligne de conduite 200 pourrait être obtenue avec une pluralité de conduites 102 selon le deuxième exemple illustré en Figure 2.

Notamment, les étapes 4 et 5 sont alors réalisées avant l'étape 3. Les conduites 102 sont formées munies de leurs dispositifs de blocage 120 respectifs à leurs extrémités.

A l'étape 3, à une première extrémité de la conduite 102, le dispositif de blocage 120 est détruit. Par destruction, on entend la mise hors service du dispositif de blocage 120, c'est-à-dire l'arrêt de sa fonction de blocage du cœur de câble supraconducteur 105. Le dispositif de blocage 120 inactif peut rester en partie ou totalement dans le tube interne 111. Puis, la terminaison 320 est connectée à la première extrémité de la conduite 102.

En outre, avant l'étape 7 de réalisation de la jonction de cryostat, le dispositif de blocage 120 de la conduite 102 adjacente qui est situé en vis-à-vis de la première conduite 102 est détruit. A la fin du procédé, on obtient alors une ligne de conduite 200 telle qu'illustrée à l'étape 7 de la Figure 8, qui comprend un seul dispositif de blocage 120 au niveau de chaque jonction de conduite 230. En enlevant l'un des dispositifs de blocage 120 adjacents à la jonction de conduite 230 on évite la nécessité de gérer la contraction du cœur de câble entre les deux dispositifs de blocage 120.

Alternativement, les dispositifs de blocage 120 de la première conduite 102 et de la conduite adjacente 102 pourraient être conservées. Cependant, il serait alors nécessaire de gérer la contraction du cœur de câble 105 entre la terminaison 320 et le dispositif de blocage 120 de la première conduite 102 le plus proche de la terminaison 320, et la contraction du cœur de câble 105 entre les dispositifs de blocage 120 situés de part et d'autre de la jonction de conduite 230. Par exemple, la contraction pourrait être gérée par une surlongueur entre la terminaison 320 et le dispositif de blocage 120 de la première conduite 102 le plus proche de la terminaison 320 ou une surlongueur entre les dispositifs de blocage 120 situés de part et d'autre de la jonction de conduite 230. La contraction peut être aussi gérée par une jonction électrique glissante ou flexible.

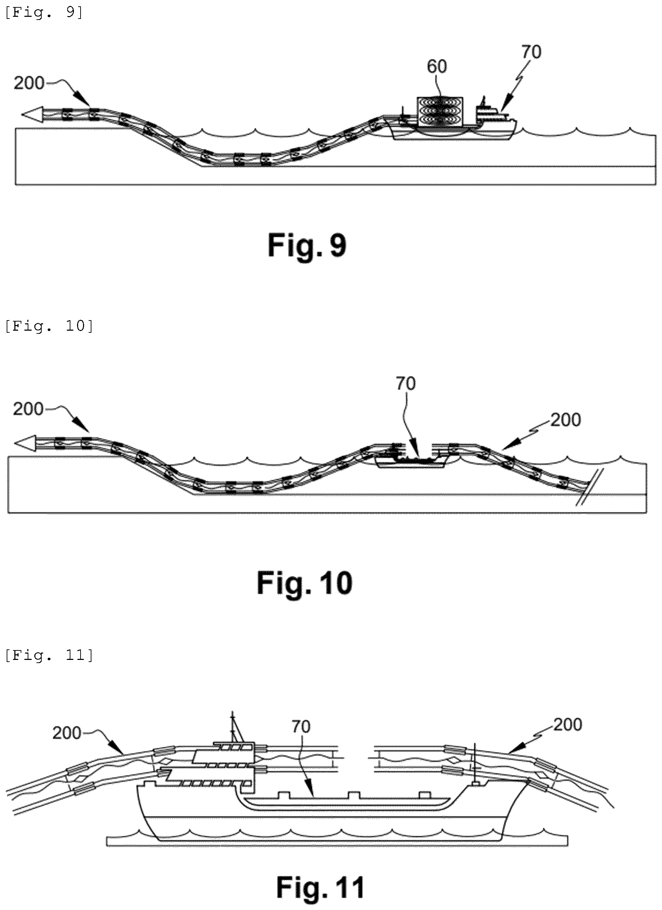

La ligne de conduite 200 peut ensuite être installée sur son site d'opération, en particulier par une méthode « enroulé/déroulé » connue en soi pour des lignes de conduite rigides. Notamment, la ligne de conduite 200 est enroulée sur un tambour 60, aussi appelé « table tournante » dans le domaine des installations sous-marines de câbles. Puis, la ligne de conduite 200 est déroulée à partir du tambour 60, notamment depuis un bateau 70 pour un dépôt sur un fond marin, comme par exemple illustré en Figure 9. La ligne de conduite 200 peut être installée différemment, par exemple par un tirage depuis la côte.

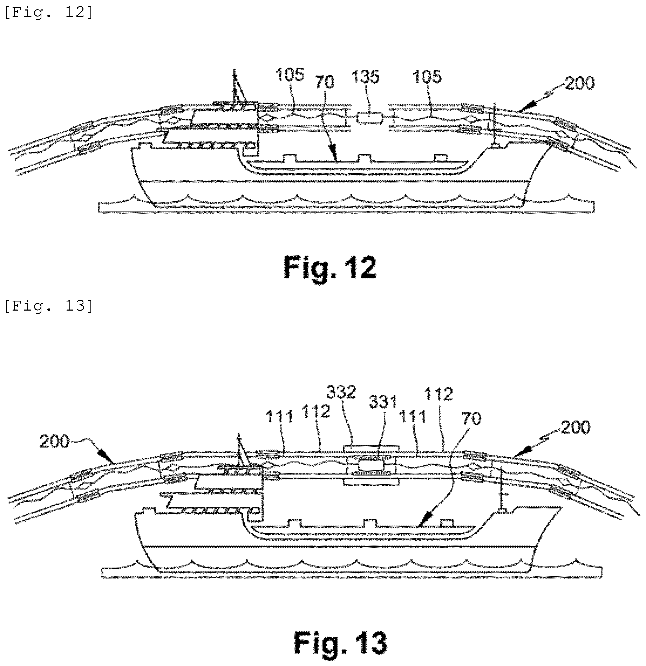

Une fois installée, une première ligne de conduite 200 peut être connectée sur site, notamment en mer, avec une deuxième ligne de conduite 200 pour former une liaison électrique supraconductrice, comme par exemple illustré en Figures 10 à 13.

La deuxième ligne de conduite 200 peut être déjà posée sur son site d'opération ou encore enroulée sur un tambour 60, notamment sur le bateau 70. En particulier, une extrémité de la première ligne de conduite 200 et une extrémité de la deuxième ligne de conduite 200 sont mises en vis-à-vis sur le bateau 70, comme notamment illustré en Figures 10 et 11.

Puis, la jonction des deux lignes de conduite 200 peut être réalisée en mer sur le bateau 70. Notamment, une jonction électrique 335 est réalisée entre les deux cœurs de câble 105. Cette jonction 335 peut être différente ou identique à la jonction 235 décrite précédemment. Puis, une jonction 331 est réalisée entre les tubes intérieurs 111 ; et une jonction 332 est réalisée entre les tubes extérieurs 112. Les jonctions 331, 332 peuvent être identiques ou différentes des jonctions 231, 232 entre les conduites décrites précédemment. Les isolants thermiques sont également raccordés, de manière identique ou différente de ce qui a été décrit en relation avec les jonctions de conduite 230.

Par exemple, pour réduire le temps de réalisation en mer d'une jonction entre deux lignes de conduite 200, la jonction électrique 335 et les jonctions des tubes 331 et 332 peuvent être préparées à terre lors de la préparation et l'installation de composants de liaisons définitifs et/ou temporaires. Puis l'assemblage final de la jonction électrique 335 entre les deux cœurs de câble 105, des jonctions 331 et 332 entre les tubes intérieurs 111 et entre les tubes extérieurs 112 et la continuité de l'isolation thermique sont réalisés sur le bateau en mer.

Notamment, lorsque la deuxième ligne de conduite est enroulée sur un tambour 60, les extrémités de la première ligne de conduite et de la deuxième ligne de conduite sont jointes. Puis, la deuxième ligne de conduite est installée de manière similaire à la première ligne de conduite, par exemple par la méthode « enroulé/déroulé ».

Notamment, la conduite 100, 102 comprend un ou plusieurs cœurs de câbles 105. Ainsi, la ligne de conduite 200 peut comprendre plusieurs cœurs de câbles installés dans un même cryostat.

La liaison électrique supraconductrice 300, 302, 303, 304 peut comprendre une ou plusieurs lignes de conduite 200.

Une fois installée, la liaison électrique supraconductrice 300, 302, 303, 304 peut relier une ou plusieurs fermes éoliennes en mer entre elles ou avec la côte. Par exemple, les fermes éoliennes sont à une distance des côtes comprise entre 50 et 100 km. Notamment, la liaison électrique supraconductrice 300, 302, 303, 304 peut servir à l'alimentation électrique de plateformes en mer à partir d'une génération électrique terrestre. La liaison électrique supraconductrice 300 peut réaliser une liaison d'interconnexion électrique sous-marine pour d'autres applications sur de courtes ou grandes distances. La liaison électrique supraconductrice 300, 302, 303, 304 peut aussi être utilisée pour une liaison électrique terrestre. Elle peut alors être enterrée, aérienne ou installée dans un forage dirigé.

En pratique, les notions de concentricité et de coaxialité peuvent être approximatives, car les tubes 111, 112 peuvent ne pas être parfaitement droits ou ronds et/ ou être montés avec un jeu d'insertion. La même remarque s'applique à la position centrale du cœur de câble 105.

De préférence, le dispositif de blocage 120 est ouvert pour permettre au fluide cryogénique circulant dans le tube intérieur 111 de passer, tout en limitant les pertes de charge dans le tube intérieur. Par exemple, le dispositif de blocage a une forme annulaire avec des ouvertures permettant au fluide de passer ou le dispositif de blocage comprend des ailettes s'étendant radialement entre le noyau du câble supraconducteur 105 et le tube intérieur 111.

## Revendications

1. Conduite (100, 102) pour une liaison électrique supraconductrice (300, 302, 303, 304), formant une unité destinée à être connectée à ses extrémités pour une formation de la liaison électrique supraconductrice, comprenant :
- un cryostat (110) formant une conduite à double enveloppe (ou PiP pour « pipe-in-pipe » en anglais) comprenant un tube intérieur (111) et un tube extérieur (112), rigides et coaxiaux l'un par rapport à l'autre, et un isolant thermique (113) occupant la zone annulaire entre le tube extérieur (112) et le tube intérieur (111), l'isolant thermique étant configuré pour permettre un centrage, en particulier à un jeu d'insertion près, du tube intérieur dans le tube extérieur ;
- un cœur de câble supraconducteur (105) logé à l'intérieur du tube intérieur (111), le cœur de câble supraconducteur (105) présentant à température ambiante une surlongueur par rapport à la longueur du cryostat (110) de sorte que dans son état supraconducteur la longueur du cœur de câble (105) est supérieure ou égale à la longueur du cryostat (110).

2. Conduite (100, 102) pour une liaison électrique supraconductrice (300, 302, 303, 304) selon la revendication 1, dans laquelle la surlongueur du cœur de câble (105) est supérieure ou égale à 0,3 % par rapport à la longueur du cryostat (110) à température ambiante.

3. Conduite (100, 102) pour une liaison électrique supraconductrice (300, 302, 303, 304) selon la revendication 1 ou 2, dans laquelle le tube intérieur (111) présente un coefficient de dilatation thermique inférieur ou égal à 2.10⁻⁶ m/(m.K).

4. Conduite (100, 102) pour une liaison électrique supraconductrice (300, 302, 303, 304) selon la revendication 3, dans laquelle le tube intérieur (111) est en un alliage FeNi entre 34 et 38% de Nickel.

5. Conduite (100, 102) pour une liaison électrique supraconductrice (300, 302, 303, 304) selon l'une des revendications précédentes, dans laquelle l'isolant thermique (113) a un module de Young en compression, supérieur à 0,1 MPa, voire 0,5 MPa.

6. Conduite (100, 102) pour une liaison électrique supraconductrice (300, 302, 303, 304) selon l'une des revendications précédentes, dans laquelle l'isolant thermique (113) est configuré pour opérer à une pression comprise entre 0,01 mbar et 10 mbar.

7. Conduite (100, 102) pour une liaison électrique supraconductrice (300, 302, 303, 304) selon l'une des revendications précédentes, comprenant une pluralité dudit cœur de câble supraconducteur (105) logés à l'intérieur du tube intérieur (111).

8. Conduite (100, 102) pour une liaison électrique supraconductrice (300, 302, 303, 304) selon l'une des revendications précédentes, comprenant au moins un dispositif de blocage (120) fixant un point du cœur de câble supraconducteur (105) au tube intérieur (111) pour reprendre les contraintes mécaniques lors de la contraction du cœur de câble supraconducteur (105).

9. Conduite (100, 102) pour une liaison électrique supraconductrice (300, 302, 303, 304) selon la revendication 8, dans laquelle le dispositif de blocage (120) forme en outre un écarteur maintenant le point du cœur de câble supraconducteur (105) à distance du tube intérieur (111).

10. Conduite (100, 102) pour une liaison électrique supraconductrice (300, 302, 303, 304) selon la revendication 8 ou 9, dans laquelle le dispositif de blocage (120) du cœur de câble (105) est situé à proximité, ou au niveau, d'une des extrémités de la conduite.

11. Conduite (102) pour une liaison électrique supraconductrice (300, 302, 303, 304) selon la revendication 10, dans laquelle un dispositif de blocage (120) respectif est situé à proximité, ou au niveau de, de chaque extrémité de la conduite.

12. Conduite (100, 102) pour une liaison électrique supraconductrice (300, 302, 303, 304) selon la revendication 8, dans laquelle le dispositif de blocage (120) est ouvert pour laisser passer un fluide cryogénique circulant dans le tube intérieur (111) en limitant les pertes de charge dans le tube intérieur.

13. Conduite (100, 102) pour une liaison électrique supraconductrice (300, 302, 303, 304) selon la revendication 8, dans laquelle le dispositif de blocage (120) est agencé pour pouvoir être mis hors service.

14. Conduite (100, 102) pour une liaison électrique supraconductrice (300, 302, 303, 304) selon l'une des revendications précédentes, dans laquelle le tube intérieur (111) a une surface interne ayant une rugosité inférieure à 30 µm, voire 10 µm, de manière à réduire la perte de charge d'un fluide cryogénique circulant dans le tube intérieur (111).

15. Ligne de conduite (200) pour une liaison électrique supraconductrice (300, 302, 303, 304), comprenant une pluralité de conduites (100, 102) selon l'une des revendications précédentes, les conduites (100, 102) étant jointes successivement à leurs extrémités par une jonction de conduite (230) respective, ladite jonction de conduite (230) comprenant :
une jonction électrique (235) réalisant une connexion électrique des cœurs de câble supraconducteur (105),
une jonction de cryostat (231,232) réalisant une jonction des tubes intérieurs (111), une jonction des tubes extérieurs (112), et une continuité des isolants thermiques (113).

16. Ligne de conduite (200) pour une liaison électrique supraconductrice (300, 302, 303, 304) selon la revendication 12, comprenant une pluralité de conduites (100, 102) selon l'une des revendications 8 à 11, ladite ligne de conduite (200) étant configurée de sorte qu'une longueur de cœur de câble (105) entre deux dispositifs de blocage (120) est supérieure à la distance entre les deux dispositifs de blocage (120).

17. Procédé d'installation d'une ligne de conduite (200) pour une liaison électrique supraconductrice (300, 302, 303, 304), comprenant :
- la réalisation de plusieurs conduites (100, 102) pour liaison électrique supraconductrice (300, 302, 303, 304) selon l'une des revendications 1 à 11 ;
- la solidarisation desdites conduites (100, 102) les unes après les autres par des jonctions de conduite (230) à leurs extrémités.

18. Procédé selon la revendication précédente comprenant la réalisation d'au moins une conduite (102) selon la revendication 11, l'étape de solidarisation comprenant la destruction d'un de ses dispositifs de blocage (120) de sorte que la ligne de conduite (200) comprenne un seul dispositif de blocage (120) au niveau de chaque jonction de conduite (230).

19. Procédé selon la revendication 13, comprenant la réalisation d'au moins une conduite (102) selon la revendication 11, l'étape de solidarisation étant configurée de sorte qu'une portion de cœur de câble supraconducteur (105) comprise entre deux dispositifs de blocage (120) en vis-à-vis de part et d'autre d'une jonction de conduite (230) sont configurés pour absorber une contraction thermique.

20. Procédé d'installation d'une ligne de conduite (200) selon la revendication 12 ou 13 comprenant :
- l'enroulement de ladite ligne de conduite (200) sur un tambour (60) ; puis,
- le déroulement de ladite ligne de conduite (200) à partir du tambour (60), notamment depuis un bateau (70) pour un dépôt sur un fond marin.

21. Procédé d'installation d'une liaison électrique supraconductrice (300, 302, 303, 304), comprenant :
- l'installation, notamment sur un fond marin, d'une première ligne de conduite (200) selon la revendication 12 ou 13 ;
- la jonction en mer, notamment sur un bateau (70), de la première ligne de conduite (200) avec une deuxième ligne de conduite (200) selon la revendication 12 ou 13.

22. Procédé selon la revendication précédente, comprenant la connexion des lignes de conduite (200) avec une ou plusieurs unités de refroidissement et/ou de pompage (312, 314) pour une circulation d'un fluide cryogénique.
